# FASCICULE DE BREVET EUROPEEN

(11) **EP 3 077 720 B1**
(45) Date de publication et mention de la délivrance du brevet: **01.11.2017**
(21) Numéro de dépôt: 14821799.5
(22) Date de dépôt: 04.12.2014
(51) Int. Cl.: F17C 13/04, B60S 5/04

(54) **CARTOUCHE DE STOCKAGE D'AIR COMPRIME**
KARTUSCHE ZUR SPEICHERUNG KOMPRIMIERTER LUFT
CARTRIDGE FOR STORING COMPRESSED AIR

(30) Priorité: 04.12.2013 FR 1362069
(43) Date de publication de la demande: 12.10.2016
(73) Titulaire: TECHNOFLUID ENGINEERING S.r.l., 20811 Cesano Maderno (MI) (IT); Aghilone, Marcello, 34120 Pezenas (FR)
(72) Inventeur: Aghilone, Marcello, 34120 Pezenas (FR)
(74) Mandataire: Rhein, Alain
(86) Numéro de dépôt international: PCT/FR2014/053162
(87) Numéro de publication internationale: WO 2015/082850

(56) Documents cités:
- EP-A1- 0 496 091
- EP-A1- 2 250 426
- EP-A1- 2 596 277
- DE-A1- 4 215 620
- FR-A1- 2 244 123
- US-A1- 2009 114 294

## Description

La présente invention concerne une cartouche de stockage d'air comprimé, notamment une cartouche de stockage d'air comprimé adaptée à être reliée à un dispositif de remplissage porté par un cycle et relié à un pédalier du cycle de façon à permettre la compression de l'air dans la cartouche pendant le pédalage.

Il existe plusieurs types de cartouches de stockage d'air comprimé.

Un premier type est celui des cartouches de stockage d'air comprimé à usage unique. Après avoir rempli d'air comprimé puis scellé une cartouche, l'air comprimé est utilisé et la cartouche est ensuite jetée ou recyclée. En général, la cartouche de stockage comprend une coque contenant l'air comprimé et une vanne à usage unique permettant l'emprisonnement de l'air comprimé dans la coque. L'actionnement de la vanne à usage unique permet à l'air comprimé de s'échapper de la cartouche. Lors du recyclage de la cartouche, il est nécessaire de remplacer la vanne à usage unique et de contrôler l'intégrité de la coque avant d'envisager de nouveau son remplissage en air comprimé.

Un second type est celui des cartouches de stockage d'air comprimé équipées de vannes permanentes. La vanne permanente, permettant de faciliter le remplissage de la cartouche, se présente sous la forme d'un clapet anti-retour dont l'actionnement libère l'entrée ou la sortie d'air comprimé. Le clapet anti-retour est monté mobile et maintenu en position de fermeture, soit par des moyens de rappel élastique (le clapet anti-retour s'ouvre sous l'effet d'une action mécanique, notamment par vissage d'un flexible présentant un ergot venant appliquer une force inverse et supérieure à la force de rappel), soit par des moyens d'actionnement mécanique (le clapet anti-retour est actionné manuellement par un organe de commande qui se présente généralement sous la forme d'une molette dont le sens de vissage permet de libérer ou de verrouiller le clapet).

D'autres types de cartouches de stockage d'air comprimé sont décrites dans les documents EP 2 596 277 et DE 42 15 620.

Un inconvénient de ces types de cartouche de stockage d'air comprimé réside dans l'ouverture et la fermeture de la vanne directement en sortie de la cartouche. Le contrôle de cette ouverture reste fastidieux et s'en trouve souvent mal géré, entraînant une perte d'air comprimé, surtout dans le cas d'une fermeture mécanique avec rappel. En outre, dans ce cas, l'usure au fil du temps des
moyens de rappel entraîne une baisse de l'étanchéité procurée par le clapet.

De plus, il n'est pas possible de connaître la quantité d'air comprimé stocké, ni la pression en sortie, sans adjoindre à la cartouche un manomètre. Une telle adjonction nécessite un circuit supplémentaire qui entraîne inévitablement une perte d'air comprimé.

Par ailleurs, il est difficile de jauger le gonflage d'un équipement à l'aide de telles cartouches, de sorte qu'en cas de gonflage supérieur à la pression souhaitée, l'air comprimé doit être expulsé depuis l'équipement gonflé après avoir déconnecté la cartouche.

La présente invention a pour but de pallier les inconvénients de l'état de la technique.

L'invention concerne une cartouche de stockage d'air comprimé comprenant un corps qui est adapté à stocker l'air comprimé et une tête qui est adaptée à fermer hermétiquement le corps et qui comprend un canal de remplissage reliant un orifice de connexion débouchant à l'extérieur de la cartouche à un orifice de remplissage débouchant dans le corps, le canal de remplissage comprenant un clapet anti-retour de remplissage qui empêche la sortie de l'air comprimé hors du corps, caractérisée en ce que la tête comprend un canal de gonflage qui relie le canal de remplissage à un orifice de gonflage débouchant dans le corps, qui comprend un clapet anti-retour de gonflage empêchant la sortie de l'air comprimé hors du corps, et dans lequel est monté mobile un organe de gonflage actionné par un bouton de gonflage et permettant l'ouverture du clapet anti-retour de gonflage.

Ainsi, selon l'invention, du fait de la présence d'un canal de remplissage qui débouche dans le corps et qui comprend un clapet anti-retour de remplissage empêchant la sortie de l'air comprimé hors du corps, et d'un canal de gonflage qui est distinct du canal de remplissage, qui débouche dans le corps et qui comprend un clapet anti-retour de gonflage empêchant la sortie de l'air comprimé hors du corps, la cartouche permet aussi bien de gonfler un équipement gonflable à partir de l'air comprimé contenu dans le corps que de remplir le corps d'air comprimé.

Selon un premier mode de réalisation, le clapet anti-retour de remplissage est ouvert quand la pression provenant d'un moyen d'approvisionnement d'air comprimé raccordé à l'orifice de connexion est supérieure à la pression régnant dans le corps.

Selon un deuxième mode de réalisation, la tête comprend un moyen de rappel élastique de gonflage sollicitant l'organe de gonflage dans une position verrouillée de gonflage dans laquelle le clapet anti-retour de gonflage empêche la sortie de l'air comprimé hors du corps.

Selon un troisième mode de réalisation, la tête comprend un manomètre relié au canal de remplissage en passant par une vanne commandée par un bouton.

Selon une variante avantageuse du troisième mode de réalisation, la vanne est formée par l'organe de gonflage et le bouton est formé par le bouton de gonflage.

Selon une variante préférentielle quand la cartouche est conforme au deuxième mode de réalisation et à la variante avantageuse du troisième mode de réalisation, l'air comprimé contenu dans le canal de remplissage atteint le manomètre quand l'organe de gonflage atteint une position de connexion au manomètre située entre la position verrouillée de gonflage et une position à partir de laquelle le clapet anti-retour de gonflage est ouvert.

De préférence, l'air comprimé contenu dans le canal de remplissage atteint le manomètre quand l'organe de gonflage atteint une position dans laquelle le clapet anti-retour de gonflage est ouvert.

Selon un quatrième mode de réalisation, la tête comprend un canal de dégonflage qui relie le canal de remplissage à un orifice débouchant à l'extérieur de la cartouche, qui comprend un clapet anti-retour de dégonflage empêchant la sortie de l'air comprimé hors de la cartouche, et dans lequel est monté mobile un organe de dégonflage actionné par un bouton de dégonflage et permettant l'ouverture du clapet anti-retour de dégonflage.

Selon une première variante avantageuse du quatrième mode de réalisation, la tête comprend un moyen de rappel élastique de dégonflage sollicitant l'organe de dégonflage dans une position dans laquelle le clapet anti-retour de dégonflage empêche la sortie de l'air comprimé hors de la cartouche.

Selon une seconde variante avantageuse du quatrième mode de réalisation, le bouton de gonflage et le bouton de dégonflage peuvent être actionnés simultanément.

Selon un cinquième mode de réalisation, la tête comprend un témoin de pression permettant de connaître la quantité d'air comprimé dans le corps.

Selon un sixième mode de réalisation, la tête comprend une soupape de sécurité s'ouvrant quand la pression régnant dans le corps atteint une valeur de sécurité.

D'autres caractéristiques et avantages ressortiront de la description détaillée de modes de réalisation non limitatifs de l'invention et illustrés dans les dessins dans lesquelles :
- la figure 1 représente schématiquement en perspective et partiellement en transparence, une cartouche et un flexible de raccordement conforme à un premier mode de réalisation de l'invention ;
- la figure 2 représente schématiquement une vue éclatée de la cartouche et du flexible de raccordement de la figure 1 ;
- la figure 3 représente schématiquement en perspective de trois quart, une tête de la cartouche des figures 1 et 2 ;
- la figure 4 représente schématiquement de côté la tête de la figure 3 ;
- la figure 5 représente schématiquement en coupe verticale selon un plan médian longitudinal la tête des figures 3 et 4 ;
- la figure 6 représente schématiquement en coupe selon un plan sensiblement médian et horizontal la tête des figures 3 à 5 ;
- la figure 7 représente schématiquement en coupe selon un plan horizontal passant par un canal de dégonflage la tête des figures 3 à 6, le canal de dégonflage étant réalisé dans la tête ;
- la figure 8 représente schématiquement en perspective un organe de dégonflage adapté à être monté coulissant dans la tête des figures 3 à 7 ;
- la figure 9 représente schématiquement en coupe selon un plan médian longitudinal l'organe de dégonflage de la figure 8 ;
- la figure 10 représente schématiquement en perspective un organe de gonflage adapté à être monté coulissant dans la tête des figures 3 à 7 ;
- la figure 11 représente schématiquement en coupe selon un plan médian longitudinal l'organe de gonflage de la figure 10 ;
- la figure 12 représente schématiquement un détail d'une extrémité des organes de gonflage et de dégonflage des figures 9 et 11 ;
- la figure 13 représente schématiquement en coupe selon un premier plan longitudinal la tête reliée au corps de la cartouche et à un équipement gonflable, les boutons de gonflage et de dégonflage étant dans leur position de repos ;
- la figure 14 représente schématiquement en coupe selon le premier plan longitudinal la tête reliée au corps de la cartouche et à l'équipement gonflable de la figure 13, le bouton de gonflage étant dans sa position de repos et le bouton de dégonflage étant dans sa position activée ;
- la figure 15 représente schématiquement en coupe selon un second plan longitudinal la tête reliée au corps de la cartouche et à l'équipement gonflable des figures 13 et 14, les boutons de gonflage et de dégonflage étant dans leur position de repos ;
- la figure 16 représente schématiquement en coupe selon le second plan longitudinal la tête reliée au corps de la cartouche et à l'équipement gonflable des figures 13 à 15, le bouton de dégonflage étant dans sa position de repos et le bouton de gonflage étant dans sa première position de connexion ; et
- la figure 17 représente schématiquement en coupe selon le second plan longitudinal la tête reliée au corps de la cartouche et à l'équipement gonflable des figures 13 à 16, le bouton de dégonflage étant dans sa position de repos et le bouton de gonflage étant dans sa deuxième position de connexion.

La présente invention concerne une cartouche de stockage d'air comprimé 1.

Une telle cartouche 1 comprend un corps 2 et une tête 3.

Le corps 2 peut présenter toute forme et, selon le mode préférentiel de réalisation, non limitatif, il présente une forme cylindrique. Le corps 2 constitue une enveloppe hermétique formant intérieurement un volume destiné à recevoir et stocker de l'air comprimée. L'enveloppe hermétique présente une unique ouverture qui est située au niveau d'une extrémité 4 du corps 2.

La tête 3 présente une forme similaire à celle du corps 2, et, selon le mode préférentiel de réalisation, non limitatif, elle présente une forme cylindrique avec un diamètre périphérique équivalent à celui du corps 2.

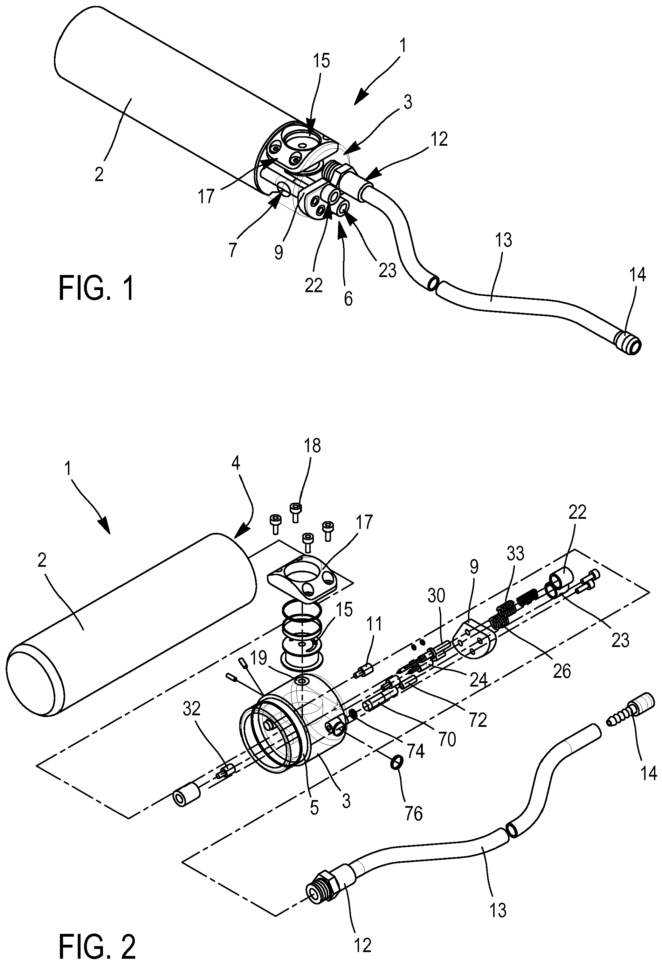

L'ouverture du corps 2 au niveau de son extrémité 4 est refermée de façon étanche par la tête 3 qui est fixée au corps 2. Cette fixation peut être opérée par tout moyen, notamment par vissage d'un filetage ménagé au niveau de la périphérie d'un côté de la tête 3 coopérant avec un taraudage complémentaire ménagé intérieurement au sein de la paroi au niveau de l'extrémité 4. Comme visible sur la figure 2, un joint de liaison 5, de préférence torique, peut être intercalé entre la tête 3 et le corps 2 afin d'améliorer l'étanchéité de la fixation de ces deux éléments. Pour ce faire, une gorge périphérique de liaison 50 est ménagée autour de la tête 3 au niveau de l'extrémité destinée à coopérer avec le corps 2.

Avantageusement, la tête 3 constitue un échangeur permettant à l'air comprimé de circuler entre l'intérieur et l'extérieur de la cartouche 1. En particulier, la tête 3 permet de remplir le corps 2 d'air comprimé, de connaître la quantité d'air comprimé dans le corps 2, et quand un équipement gonflable est relié à la tête 3, de mesurer la pression de l'équipement gonflable, de dégonfler l'équipement gonflable et de le gonfler à l'aide de l'air comprimé contenu dans le corps 2.

Pour opérer ces différentes opérations, la tête 3 comprend des moyens de contrôle 6. Les moyens de contrôle 6 comprennent plusieurs organes qui coopèrent au sein de la tête 3.

Afin de connaître la quantité d'air comprimé dans le corps 2, la tête 3 comprend un témoin de pression 7. Ce témoin de pression 7 se présente préférentiellement sous la forme d'un organe de mesure 70 monté mobile comme un piston simple effet dans un canal de mesure 71 qui est ménagé au sein de la tête 3 (en l'occurrence, le canal de mesure 71 s'étend parallèlement à l'axe médian longitudinal de la tête 3) et qui débouche dans le corps 2. En particulier, l'extrémité de la tête 3 qui obstrue l'unique ouverture du corps 2 comprend un orifice de mesure 73 qui assure à l'air comprimé contenu dans le corps 2 de pénétrer dans le canal de mesure 71.

L'étanchéité entre l'organe de mesure 70 et l'orifice de mesure 73 est assurée par un joint de mesure 74, qui, ici, est torique.

Le canal de mesure 71 comprend à son extrémité opposée à celle de l'orifice de mesure 73, un orifice de montage réalisé au niveau d'une face distale 8 de la tête 3. C'est par cet orifice de montage que sont insérés les éléments constituant le témoin de pression 7 dont l'organe de mesure 70 et le joint de mesure 74.

L'organe de mesure 70 est maintenu au sein du canal de mesure 71 par un moyen de rappel élastique de mesure 72 qui, ici, est sous la forme d'un ressort de compression 72. Le moyen de rappel élastique de mesure 72 est prévu pour offrir une résistance au déplacement de l'organe de mesure 70 en translation le long du canal de mesure 71. Le moyen de rappel élastique de mesure 72 est dimensionné et configuré pour se comprimer plus ou moins en fonction de la pression régnant dans le corps 2 et assurer le déplacement de l'organe de mesure 70 sur une longueur plus ou moins importante le long du canal de mesure 71.

L'organe de mesure 70 et le moyen de rappel élastique de mesure 72 sont maintenus en compression au sein du canal de mesure 71 par une plaque de fermeture 9 étanche. La plaque de fermeture 9 vient obturer l'orifice de montage du canal de mesure 71 situé au niveau de la face distale 8 de la tête 3.

Dès lors, afin d'assurer le rôle de jauge du témoin de pression 7, l'organe de mesure 70 est, par exemple, équipée extérieurement d'un revêtement gradué ou coloré (par exemple de plusieurs couleurs successives, comme le vert et le rouge). Le déplacement de l'organe de mesure 70 par rapport à un point fixe permet donc d'indiquer un niveau de pression interne au corps 2.

Pour indiquer le niveau de pression, la tête 3 présente une fenêtre de visualisation 75 qui est ménagée à la paroi extérieure de la tête 3 et qui débouche au sein du canal de mesure 71 en vis-à-vis de l'organe de mesure 70 et de son revêtement coloré ou gradué. La fenêtre de visualisation 75 est refermée de façon étanche par un hublot transparent 76.

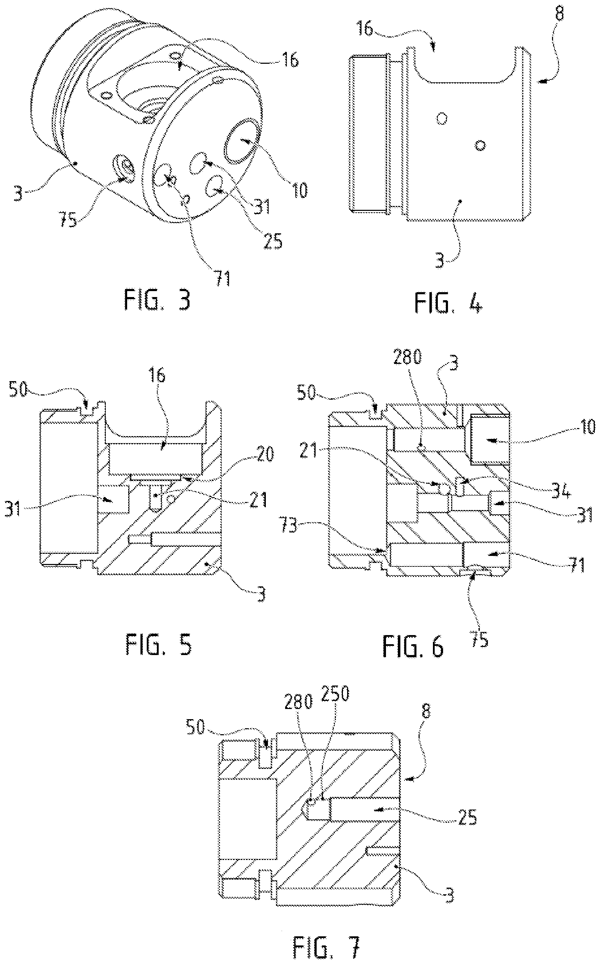

Les différents éléments constituant le témoin de pression 7 sont particulièrement visibles sur les figures 2 et 6.

Ainsi, il est possible de savoir rapidement, d'un simple coup d'oeil, la quantité approximative d'air comprimé contenu dans la cartouche 1 (voire de savoir si la cartouche 1 est vide).

De façon essentielle, afin d'assurer notamment le remplissage du volume interne du corps 2, la tête 3 comprend un canal de remplissage 10. Le canal de remplissage 10 traverse la tête 3 et s'étend de la face distale 8 jusqu'à un orifice de remplissage qui est réalisé à l'extrémité de la tête 3 obstruant l'unique ouverture du corps 2. Cet orifice de remplissage permet une mise en communication du canal de remplissage 10 avec le corps 2. Ce canal de remplissage 10 forme une partie d'un circuit de circulation permettant à l'air comprimé de circuler entre le corps 2 et l'extérieur de la cartouche 1 (le canal de mesure 71 ne fait pas partie du circuit de circulation).

Le canal de remplissage 10 s'étend parallèlement à l'axe médian longitudinal de la tête 3.

Afin de ne laisser circuler l'air comprimé que depuis l'extérieur de la cartouche 1 vers le corps 2, le canal de remplissage 10 (de préférence au niveau de l'orifice de remplissage) comprend un clapet anti-retour de remplissage 11.

De façon préférentielle, le clapet anti-retour de remplissage 11 est maintenu au sein du canal de remplissage 10 par la fixation d'un embout 12 au niveau de la face distale 8. Cette fixation peut notamment être assurée par vissage d'un filetage qui est réalisé extérieurement à l'embout 12 et qui coopère avec un taraudage complémentaire réalisé intérieurement au niveau du canal de remplissage 10 (plus précisément au niveau d'un orifice de connexion qui est l'ouverture du canal de remplissage 10 au niveau de la face distale 8).

Tout type d'embout 12 peut être fixé à la tête 3. Selon le mode préférentiel de réalisation, représenté sur les figures 1 et 2, l'embout 12 est disposé à une première extrémité d'un flexible de raccordement 13 qui permet de raccorder la cartouche 1 à un équipement gonflable ou à un moyen d'approvisionnement en air comprimé tels qu'un moyen de compression d'air. Le flexible de raccordement 13 comprend au niveau de sa deuxième extrémité un raccord 14, par exemple de type « schrader », permettant notamment de raccorder de façon hermétique le flexible de raccordement 13 à une valve d'un pneumatique.

Dans le cas où il est nécessaire de remplir le corps 2 d'air comprimé, le flexible de raccordement 13 est relié à l'orifice de connexion et à un moyen d'approvisionnement en air comprimé (de préférence un dispositif porté par un cycle et relié à un pédalier du cycle, comme celui divulgué dans la demande de brevet WO 2013/076429). La pression de l'air comprimé produit par le moyen d'approvisionnement en air comprimé remplit le flexible de raccordement 13 et le canal de remplissage 10. Quand la pression de l'air comprimé produit par le moyen d'approvisionnement en air comprimé est supérieure à la pression régnant dans le corps 2, le clapet anti-retour de remplissage 11 passe d'une position fermée de remplissage à une position ouverte de remplissage et permet le remplissage du corps 2.

Les différents éléments relatifs au canal de remplissage 10 sont particulièrement visibles sur les figures 1 et 6.

Afin de mesurer la pression régnant dans l'équipement gonflable relié à la cartouche 1 par le flexible de raccordement 13, la tête 3 est équipée d'un manomètre 15. Le manomètre 15 vient se loger dans une réservation 16 prévue à cet effet et ménagée en partie supérieure de la tête 3. Le manomètre 15 est verrouillé au sein de la réservation 16 par l'intermédiaire de moyens de verrouillage 17 adaptés, comme une bague de fixation 17. Les moyens de verrouillage 17 sont fixés à la tête 3 par l'intermédiaire de vis 18 qui coopèrent au sein de taraudages complémentaires ménagés dans l'épaisseur de la tête 3.

De plus, la réservation 16 (et de ce fait l'entrée du manomètre 15) est connectée au canal de remplissage 10 par un canal de liaison de manomètre 21 qui, ici, est descendant. Le canal de liaison de manomètre 21, débouche à son extrémité supérieure au niveau de la réservation 16, en entrée du manomètre 15. Le canal de liaison de manomètre 21 débouche directement dans la réservation 16 mais est relié indirectement au canal de remplissage 10 en passant par d'autres canaux.

L'étanchéité entre le manomètre 15 et la réservation 16 est effectuée par un joint de manomètre 19, qui, ici, est torique. Le joint de manomètre 19 est intercalé au sein d'un décroché 20.

Lorsqu'un équipement gonflable ou est connecté, notamment par l'intermédiaire de l'embout 12, l'air comprimé contenu dans l'équipement gonflable circule jusqu'au manomètre 15 qui permet d'indiquer la pression régnant dans l'équipement gonflable.

En outre, si la pression régnant dans l'équipement gonflable est inférieure à celle régnant dans le corps 2, le clapet anti-retour de remplissage 11 joue son rôle et empêche l'air comprimé de sortir du corps 2.

Les différents éléments relatifs au manomètre 15 sont particulièrement visibles aux figures 1, 2 et 5.

Afin de contrôler le dégonflage et le gonflage d'un équipement gonflable, les moyens de contrôle 6 comprennent un bouton de gonflage 22 et un bouton de dégonflage 23 qui peuvent être activées par un utilisateur de la cartouche 1.

Le bouton de dégonflage 23 permet de contrôler la liaison entre l'air libre et le canal de remplissage 10 auquel est relié l'équipement gonflable via le flexible de raccordement 13 et l'orifice de connexion.

Pour ce faire, le bouton de dégonflage 23 est mobile entre une position de repos de dégonflage dans laquelle aucune circulation ne s'effectue entre le canal de remplissage 10 et l'atmosphère de l'air libre, et une position activée de dégonflage dans laquelle le canal de remplissage 10 est en communication avec l'atmosphère de l'air libre.

Selon le mode préférentiel de réalisation, le bouton de dégonflage 23 est constitué d'un bouton poussoir actionnant un organe de dégonflage 24 monté en translation le long d'un canal de dégonflage 25 qui est réalisé au sein de la tête 3. Le canal de dégonflage 25 présente un fond (le canal de dégonflage 25 est borgne) et débouche au niveau de la face distale 8. Dès lors, la course de l'organe de dégonflage 24 est bloquée à une position maximale quand il est en butée au fond du canal de dégonflage 25.

En particulier, au fond du canal de dégonflage 25 est inséré un clapet anti-retour de dégonflage 27 à l'extrémité de l'organe de dégonflage 24. De ce fait, c'est le clapet anti-retour de dégonflage 27 qui vient en butée au fond du canal de dégonflage 25.

De plus, l'organe de dégonflage 24 est maintenu automatiquement en position verrouillée de dégonflage dans laquelle est coupée la circulation entre le canal de remplissage 10 et l'air libre. Pour ce faire, un moyen de rappel élastique de dégonflage 26 (ici, un ressort de compression de dégonflage 26) agit sur l'organe de dégonflage 24.

Dans le présent mode de réalisation, la plaque de fermeture 9 assure le maintien de l'organe de dégonflage 24 et du moyen de rappel élastique de dégonflage 26 au sein du canal de dégonflage 25, empêchant leur extraction.

Selon le mode préférentiel de réalisation, c'est l'appui sur le bouton de dégonflage 23 qui fait coulisser l'organe de dégonflage 24 le long du canal de dégonflage 25 jusqu'à ce qu'il vienne en butée contre le clapet anti-retour de dégonflage 27 et entraîne ce dernier d'une position fermée de dégonflage à une position ouverte de dégonflage où l'air comprimé passe du canal de remplissage 10 vers l'extérieur de la cartouche 1. Inversement, quand il n'y a plus d'appui sur le bouton de dégonflage 23, le moyen de rappel élastique de dégonflage 26 renvoie l'organe de dégonflage 24 dans sa position verrouillée de dégonflage, fermant la circulation entre le canal de remplissage 10 et l'extérieur de la cartouche 1.

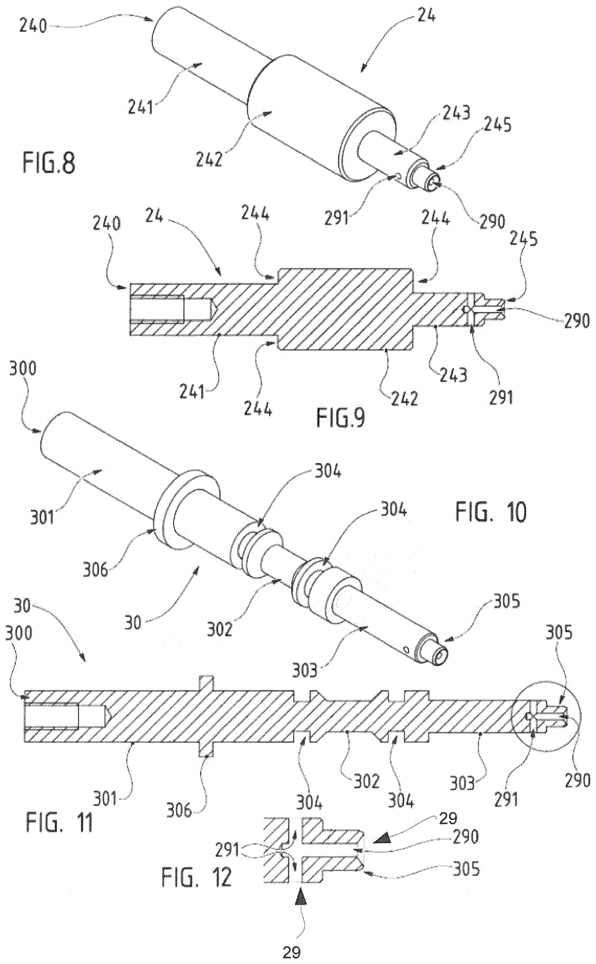

Plus précisément, comme représenté aux figures 8 et 9, l'organe de dégonflage 24 présente une forme globalement cylindrique, d'un diamètre extérieur correspondant au diamètre intérieur du canal de dégonflage 25, avec le jeu nécessaire pour autoriser le coulissement de l'organe de dégonflage 24 le long du canal de dégonflage 25.

Selon le mode de réalisation préférentiel, l'organe de dégonflage 24 comprend successivement dans le sens longitudinal, d'une première extrémité de dégonflage 240 destinée à coopérer avec le bouton de dégonflage 23 à une seconde extrémité de dégonflage 245, un premier segment de dégonflage 241 ayant un premier diamètre de dégonflage, un second segment de dégonflage 242 ayant un second diamètre de dégonflage supérieur au premier diamètre de dégonflage, et un troisième segment de dégonflage 243 ayant un troisième diamètre de dégonflage inférieur au premier diamètre de dégonflage. Le second segment de dégonflage 242 est séparé, d'une part, du premier de dégonflage 241 qui lui est contigu par un premier décroché de dégonflage 244 et, d'autre part, du troisième segment de dégonflage 243 qui lui est contigu par un second décroché de dégonflage 244.

Dès lors, le canal de dégonflage 25 présente une section complémentaire à la forme extérieure de l'organe de dégonflage 24. En particulier, le canal de dégonflage 25 comprend successivement dans le sens longitudinal, depuis son fond, une portion d'extrémité de dégonflage 250 qui reçoit le troisième segment de dégonflage 243, et une portion principale de dégonflage ayant un diamètre supérieur au diamètre de la portion d'extrémité de dégonflage 250.

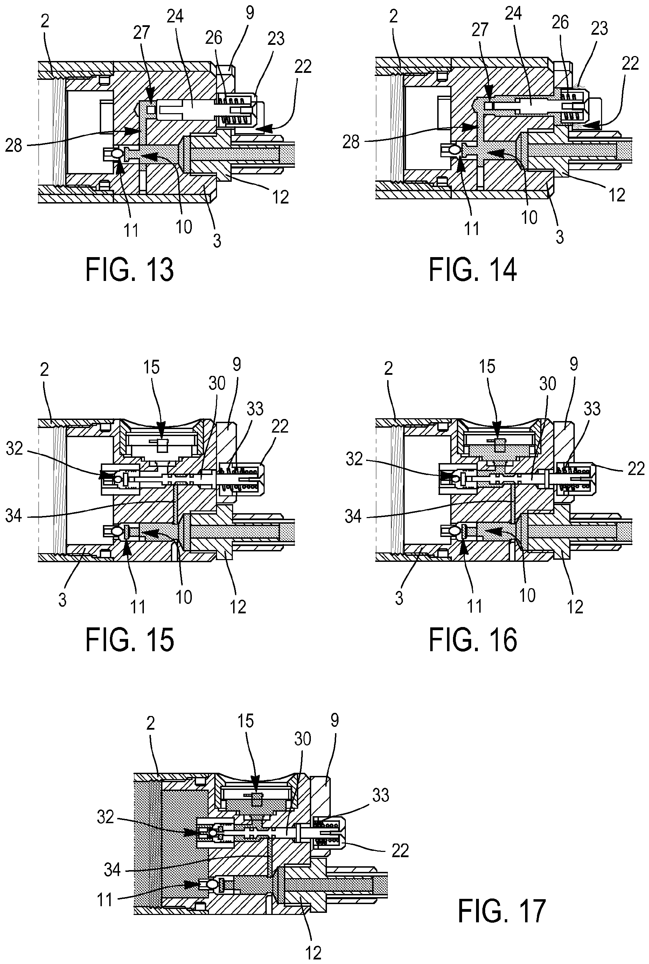

Avantageusement, la jonction entre le canal de remplissage 10 et le canal de dégonflage 25 s'effectue au niveau de la portion d'extrémité de dégonflage 250. Pour ce faire, un canal de liaison de dégonflage 28 est réalisé dans la tête 3 et relie la portion d'extrémité de dégonflage 250 et le canal de remplissage 10. Le canal de liaison de dégonflage 28 comprend une première extrémité 280 qui débouche au niveau du canal de remplissage 10 et une seconde extrémité 280 qui débouche au niveau de la portion d'extrémité de dégonflage 250, comme représenté aux figures 6 et 7. Le canal de liaison de dégonflage 28 est visible aux figures 13 et 14.

Ainsi, lorsqu'un équipement gonflable est connecté au canal de remplissage 10 par l'intermédiaire de l'embout 12 et que le bouton de dégonflage 23 est actionné, l'air comprimé circule jusqu'au canal de dégonflage 25, passe autour de l'organe de dégonflage 24 et s'évacue à l'air libre par la seconde extrémité de dégonflage du canal de dégonflage 25.

Plus précisément, l'évacuation de l'air comprimé vers l'extérieur est permise par le clapet anti-retour de dégonflage 27. Le contrôle du clapet anti-retour de dégonflage 27 est effectué par la translation de l'organe de dégonflage 24 suite à l'appui sur le bouton de dégonflage 23.

La seconde extrémité de dégonflage 245 de l'organe de dégonflage 24 qui est située au fond du canal de dégonflage 25, vient appuyer sur le clapet anti-retour de dégonflage 27, ce qui permet à l'air comprimé contenu dans le canal de liaison de dégonflage 28 de sortir hors de la cartouche 1. Tout particulièrement, afin d'améliorer la circulation du fluide au niveau de la seconde extrémité de dégonflage 245, cette dernière est percée de canaux internes de dégonflage 29 qui sont adaptés à être empruntés par l'air comprimé.

Comme illustré à la figure 12, les canaux internes de dégonflage 29 comprennent, d'une part, un canal médian de dégonflage 290 borgne qui s'étend le long de l'axe de l'organe de dégonflage 24 et débouche à la seconde extrémité de dégonflage 245, et, d'autre part, au moins deux canaux latéraux de dégonflage 291 qui s'étendent radialement de façon à relier le canal médian de dégonflage 290 à l'extérieur de l'organe de dégonflage 24 au niveau du troisième segment de dégonflage 243. Préférentiellement, les canaux latéraux de dégonflage 291 sont diamétralement opposés.

Ainsi, lorsque l'organe de dégonflage 24 est poussé vers le fond du canal de dégonflage 25 par appui sur le bouton de dégonflage 23, le clapet anti-retour de dégonflage 27 est également poussé et le canal médian de dégonflage 290 se trouve connecté à la seconde extrémité 280 du canal de liaison de dégonflage 28. L'air comprimé circule alors à l'intérieur du canal médian de dégonflage 290 et des canaux latéraux de dégonflage 291, sort de l'organe de dégonflage 24 et s'écoule autour de ce dernier le long du canal de dégonflage 25. Lorsque l'appui sur le bouton de dégonflage 23 est arrêté, le moyen de rappel élastique de dégonflage 26 repousse l'organe de dégonflage 24 en position verrouillée de dégonflage, le clapet anti-retour de dégonflage 27 se déplace de sa position ouverte de dégonflage à sa position fermée de dégonflage et coupe la liaison entre le canal de liaison de dégonflage 28 et le canal de remplissage 10. La figure 13 représente la tête 3 avec le bouton de dégonflage 23 non appuyé, tandis que la figure 14 la représente avec le bouton de dégonflage 23 appuyé.

En particulier, le clapet anti-retour de dégonflage 27 est pourvu d'une bille de dégonflage qui est repoussée automatiquement en dans une position de verrouillage où la liaison entre le canal de liaison de dégonflage 28 et le canal de remplissage 10 est coupée. La seconde extrémité de dégonflage 245 présente une couronne évasée de dégonflage qui forme un siège pour recevoir la bille de dégonflage et, lors de l'appui sur le bouton de dégonflage 23, pour déplacer la bille de dégonflage et laisser l'air comprimé circuler.

Une particularité de l'invention réside dans le fait que ce type de déplacement de la bille de dégonflage permet d'appliquer une force adaptée pour déplacer le clapet anti-retour de dégonflage 27 dans sa position ouverte de dégonflage, même si la pression que l'air comprimé exerce sur lui importante (par exemple de l'ordre de 40 bars).

Le bouton de gonflage 22 permet de contrôler la communication entre le canal de remplissage 10 auquel est relié l'équipement gonflable (via le flexible de raccordement 13 et l'orifice de connexion) et, d'une part, le manomètre 15, et, d'autre part, le corps 2 afin de contrôler la circulation de l'air comprimé entre l'équipement gonflable et le manomètre 15, et éventuellement le corps 2.

Pour ce faire, le bouton de gonflage 22 est mobile entre une position de repos de gonflage comme illustré à la figure 15, une première position de connexion comme illustré à la figure 16, et une deuxième position de connexion comme illustré à la figure 17.

Quand il est dans sa position de repos de gonflage, le bouton de gonflage 22 n'est pas appuyé et l'air comprimé contenu dans le canal de remplissage 10 (qui communique avec l'équipement gonflable) y est prisonnier.

Quand il est dans sa première position de connexion, le bouton de gonflage 22 permet la liaison entre le canal de remplissage 10 et le manomètre 15, ce qui permet de connaître la pression régnant dans l'équipement gonflable.

Quand il est dans sa deuxième position de connexion, le bouton de gonflage 22 permet la liaison entre le canal de remplissage 10, le manomètre 15 et le corps 2, ce qui permet de gonfler l'équipement gonflable et de connaître la pression qui y règne.

Selon le mode préférentiel de réalisation, le bouton de gonflage 22 est constitué d'un bouton poussoir actionnant un organe de gonflage 30 monté en translation le long d'un canal de gonflage 31 qui est réalisé au sein de la tête 3. Le canal de gonflage 31 débouche, d'une part, au niveau de la face distale 8 et, d'autre part, dans le corps 2 par l'intermédiaire d'un orifice de gonflage qui est réalisé à l'extrémité de la tête 3 obstruant l'unique ouverture du corps 2.

En particulier, au fond du canal de gonflage 31 (au niveau de l'orifice de gonflage) est inséré un clapet anti-retour de gonflage 32 dont la position par défaut empêche le passage de l'air comprimé entre le corps 2 et le canal de gonflage 31.

De plus, l'organe de gonflage 30 est maintenu automatiquement en position verrouillée de gonflage dans laquelle est coupée la circulation entre le canal de remplissage 10 et, d'une part le manomètre 15 et d'autre part le corps 2. Pour ce faire, un moyen de rappel élastique de gonflage 33 (ici, un ressort de compression de gonflage 33) agit sur l'organe de gonflage 30.

Dans le présent mode de réalisation, la plaque de fermeture 9 assure le maintien de l'organe de gonflage 30 et du moyen de rappel élastique de gonflage 33 au sein du canal de gonflage 31, empêchant leur extraction.

Selon le mode préférentiel de réalisation, c'est l'appui sur le bouton de gonflage 22 qui fait coulisser l'organe de gonflage 30 le long du canal de gonflage 31 et autorise la circulation de l'air comprimé entre l'intérieur et l'extérieur du canal de remplissage 10. Inversement, quand il n'y a plus d'appui sur le bouton de gonflage 22, le moyen de rappel élastique de gonflage 33 renvoie l'organe de gonflage 30 dans sa position verrouillée de gonflage, fermant la circulation entre l'intérieur et l'extérieur du canal de remplissage 10 et l'extérieur de la cartouche 1.

Plus précisément, comme représenté aux figures 10 et 11, l'organe de gonflage 30 présente une forme globalement cylindrique, d'un diamètre extérieur correspondant au diamètre intérieur du canal de gonflage 31, avec le jeu nécessaire pour autoriser le coulissement de l'organe de gonflage 30 le long du canal de gonflage 31.

Selon le mode de réalisation préférentiel, l'organe de gonflage 30 comprend successivement dans le sens longitudinal, d'une première extrémité de gonflage 300 destinée à coopérer avec le bouton de gonflage 22 à une seconde extrémité de gonflage 305, un premier segment de gonflage 301 ayant un premier diamètre de gonflage, un second segment de gonflage 302 ayant un second diamètre de gonflage inférieur au premier diamètre de gonflage, et un troisième segment de gonflage 303 ayant un troisième diamètre de gonflage inférieur au second diamètre de gonflage. Le second segment de gonflage 302 est séparé, d'une part, du premier de gonflage 301 qui lui est contigu par un premier décroché de gonflage et, d'autre part, du troisième segment de gonflage 303 qui lui est contigu par un second décroché de gonflage.

De plus, le second segment de gonflage 302 est séparé, d'une part, du premier de gonflage 301 par une première gorge 304 et, d'autre part, du troisième segment de gonflage 303 par une seconde gorge 304. Les première et seconde gorge 304 s'étendent sur le pourtour de l'organe de gonflage 30 et sont adaptées à recevoir des joints d'étanchéité qui, ici, sont toriques. Les joints d'étanchéité permettent d'assurer l'étanchéité d'une zone comprise entre le second segment de gonflage 302 et la paroi interne du canal de gonflage 31 malgré le faible diamètre du second segment de gonflage 302.

Dès lors, le canal de gonflage 31 présente une section complémentaire à la forme extérieure de l'organe de gonflage 30.

En outre, le premier segment de gonflage 301 comprend une rondelle 306 qui est saillante radialement et qui fait office de butée contre un décroché réalisé au sein du canal de gonflage 31, comme illustré aux figures 6, 16 et 17. La mise en butée de la rondelle 306 contre le décroché limite la course maximale de l'organe de gonflage 30 au sein du canal de gonflage 31.

Avantageusement, la jonction entre le canal de remplissage 10 et le canal de gonflage 31 s'effectue au niveau du second segment de gonflage 302. Pour ce faire, un canal de liaison de gonflage 34 est réalisé dans la tête 3 et relie le canal de remplissage 10 à la portion du canal de gonflage 31 où se situe le second segment de gonflage 302. Le canal de liaison de gonflage 34 est visible aux figures 15 à 17.

Ainsi, lorsqu'un équipement gonflable est connecté au canal de remplissage 10 par l'intermédiaire de l'embout 12 et quand le bouton de gonflage 22 n'est pas appuyé, l'organe de gonflage 30 en position verrouillée de gonflage limite la circulation de l'air comprimé venant du canal de remplissage 10 à la zone comprise entre le second segment de gonflage 302 et la paroi interne du canal de gonflage 31, les joints d'étanchéité empêchant toute circulation de l'air comprimé hors de cette zone.

Lorsqu'un équipement gonflable est connecté au canal de remplissage 10 par l'intermédiaire de l'embout 12 et quand le bouton de gonflage 22 est appuyé de façon à être dans sa première position de connexion, le canal de remplissage 10 est en communication avec le manomètre 15. Dans cette configuration, l'organe de gonflage 30 est déplacé en translation de sorte que l'orifice de liaison entre le canal de gonflage 31 et le canal de liaison de manomètre 21 se trouve dans la zone comprise entre le second segment de gonflage 302 et la paroi interne du canal de gonflage 31. Comme illustré à la figure 16, dans cette configuration, le joint d'étanchéité disposé dans la seconde gorge 304 n'assure plus d'étanchéité de sorte que l'air comprimé atteint le clapet anti-retour de gonflage 32 qui est en position fermée.

Ainsi, l'air comprimé contenu dans l'équipement gonflable circule jusqu'au manomètre 15, permettant de mesurer la pression interne de l'équipement gonflable.

Par ailleurs, il est possible d'appuyer à la fois sur le bouton de gonflage 22 jusqu'à sa première position de connexion et sur le bouton de dégonflage 23, de façon à pouvoir lire sur le manomètre 15 la pression régnant dans l'équipement gonflable pendant que l'air comprimé en est évacué.

Il est alors possible de réguler réduction de la pression interne de l'équipement gonflable tout en connaissant avec exactitude la mesure de cette pression grâce au manomètre 15.

Lorsqu'un équipement gonflable est connecté au canal de remplissage 10 par l'intermédiaire de l'embout 12 et quand le bouton de gonflage 22 est appuyé de façon à être dans sa deuxième position de connexion, le canal de remplissage 10 est en communication avec le manomètre 15 et le corps 2. Dans cette seconde position de connexion qui est une position plus enfoncée que la première position de connexion, l'air comprimé contenu dans le corps 2 passe par le clapet anti-retour de gonflage 32 et pénètre l'équipement gonflable en passant par le canal de gonflage 31, le canal de liaison de gonflage 34, le canal de remplissage 10, et le flexible de raccordement 13. Le contrôle du clapet anti-retour de gonflage 32 est effectué par la translation de l'organe de gonflage 30 suite au passage du bouton de gonflage 22 dans sa deuxième position de connexion.

La seconde extrémité de gonflage 305 de l'organe de gonflage 30 qui est située au fond du canal de gonflage 21, vient appuyer sur le clapet anti-retour de gonflage 22, ce qui permet à l'air comprimé contenu dans le corps 2 de pénétrer dans le canal de gonflage 21. Tout particulièrement, afin d'améliorer la circulation du fluide au niveau de la seconde extrémité de gonflage 305, cette dernière est percée de canaux internes de gonflage 29 qui sont adaptés à être empruntés par l'air comprimé.

Comme illustré à la figure 12, les canaux internes de gonflage 29 comprennent, d'une part, un canal médian de gonflage 290 borgne qui s'étend le long de l'axe de l'organe de gonflage 30 et débouche à la seconde extrémité de dégonflage 305, et, d'autre part, au moins deux canaux latéraux de gonflage 291 qui s'étendent radialement de façon à relier le canal médian de gonflage 290 à l'extérieur de l'organe de gonflage 30 au niveau du troisième segment de gonflage 303. Préférentiellement, les canaux latéraux de gonflage 291 sont diamétralement opposés.

Ainsi, lorsque le bouton de gonflage 22 est entraîné dans sa deuxième position de connexion, l'organe de gonflage 30 entraîne l'ouverture du clapet anti-retour de gonflage 32. L'air comprimé sort alors du corps 2 et circule alors à l'intérieur du canal médian de gonflage 290 et des canaux latéraux de gonflage 291, sort de l'organe de gonflage 30 et s'écoule autour de ce dernier le long du canal de gonflage 31 jusqu'au joint d'étanchéité disposé dans la première gorge 304.

En particulier, le clapet anti-retour de gonflage 32 est pourvu d'une bille de gonflage qui est repoussée automatiquement en dans une position de verrouillage où la liaison entre le corps 2 et le canal de gonflage 31 est coupée. La seconde extrémité de gonflage 305 présente une couronne évasée de gonflage qui forme un siège pour recevoir la bille de gonflage et, lors de l'appui sur le bouton de gonflage 22, pour déplacer la bille de gonflage et laisser l'air comprimé circuler.

Ce type de déplacement de la bille de gonflage permet d'appliquer une force adaptée pour déplacer le clapet anti-retour de gonflage 32 dans sa position ouverte de gonflage, même si la pression régnant dans le corps 2 est importante (par exemple de l'ordre de 40 bars).

Lors du gonflage de l'équipement gonflable, le canal de gonflage 31 est toujours relié au manomètre 15, ce qui permet de mesurer l'augmentation de pression de l'équipement gonflable.

Grâce au manomètre 15, il est possible de réguler l'augmentation de la pression interne de l'équipement gonflable.

Evidemment, pour que le gonflage de l'équipement gonflable se fasse, il est nécessaire que la pression régnant dans le corps 2 soit supérieure à celle régnant dans l'équipement gonflable, et du fait de gonflage, la pression régnant dans le corps 2 diminue alors que celle régnant dans l'équipement gonflable augmente.

Par ailleurs, il est possible d'appuyer à la fois sur le bouton de gonflage 22 jusqu'à sa deuxième position de connexion et sur le bouton de dégonflage 23, de façon à pouvoir lire sur le manomètre 15 la pression régnant dans l'équipement gonflable tout en diminuant ou augmentant cette pression. Cet actionnement particulier permet aussi de réaliser une communication du corps 2 avec l'extérieur de la cartouche 1 et de réaliser ainsi une vidange du corps 2.

Le passage et le maintien d'une position à une autre du bouton de gonflage 22 peut s'effectue par l'intermédiaire d'un système adapté, notamment à cliquet, assurant le verrouillage dans l'une ou l'autre position après un appui.

En relation aux figures 13 à 17, l'air comprimé est représenté par la couleur grise.

Selon le mode de réalisation préférentiel, représenté sur les dessins, le corps 2 présente un volume interne de 220 millilitres qui est susceptible de contenir jusqu'à 11 litres d'air comprimé à une pression de 50 bars. La cartouche 1 comprenant 50 bars d'air comprimé pèse environ 280 g, elle présente un diamètre de 4,5 cm et une hauteur d'environ 20 cm dont environ 16 cm pour le corps 2.

Selon des tests menés, le corps 2 résiste à une pression interne de 80 bars.

Une telle cartouche 1 permet de réguler la pression d'un équipement gonflable de façon précise grâce au manomètre 15.

De façon subsidiaire, la cartouche 1 est adaptée à coopérer avec un dispositif de compression d'air pour cycle, tel que décrit dans la demande WO 2013/076429, en vue de son remplissage en air comprimée. Le moyen d'approvisionnement en air comprimé de la cartouche peut également être un compresseur électrique.

Ainsi, la cartouche 1 selon l'invention permet de contrôler efficacement et précisément, au moyen d'un seul et unique dispositif, le gonflage et le dégonflage d'un équipement, tout en mesurant l'évolution de sa pression interne.

La cartouche 1 permet ainsi de gonfler les roues d'un cycle dont la pression usuelle est d'environ 3 bars, la fourche d'un cycle dont la pression usuelle est d'environ 8 bars, les amortisseurs d'un cycle dont la pression usuelle est en général comprise entre 15 et 25 bars. Elle permet également, grâce au débit important d'air comprimé qu'elle libère, de monter un pneumatique sans chambre (« tubeless »).

De préférence, le témoin de témoin de pression 7 comprend une soupape de sécurité permettant de définir le maximum de la pression régnant dans le corps 2 (par exemple 50 bars). Plus précisément, la soupape de sécurité est disposée au sein d'un canal de sécurité qui est réalisé dans la tête 3 et qui relie l'extérieur de la cartouche 1 au canal de mesure 71. Une fois la pression maximale atteinte, l'air comprimé contenu dans le corps 2 et le canal de mesure 71 entraîne le déplacement de la soupape de sécurité et sort de la cartouche 1.

Egalement de préférence, le canal de remplissage 10 comprend, juste avant l'orifice de remplissage, un changement d'orientation permettant de rendre compact l'ensemble formé par la cartouche et le flexible de raccordement 13. Plus précisément, le canal de remplissage 10 comprend un premier coude à 90° suivi d'un second coude à 90° de sorte que la forme générale du canal de remplissage est un U. De préférence, le second coude à 90° est réalisé dans un organe complémentaire monté pivotant et étanche par rapport à la tête autour de l'axe de la section du canal de remplissage 10 délimitée par les deux coudes à 90°. Ce pivotement permet de changer facilement l'orientation de l'orifice de remplissage selon que le flexible de raccordement 13 est relié à un équipement gonflable ou à un moyen d'approvisionnement en air comprimé ou non (le flexible de raccordement 13 s'étend depuis la tête 3 et longe le corps 2).

## Revendications

1. Cartouche de stockage d'air comprimé (1) comprenant un corps (2) qui est adapté à stocker l'air comprimé et une tête (3) qui est adaptée à fermer hermétiquement le corps (2) et qui comprend un canal de remplissage (10) reliant un orifice de connexion débouchant à l'extérieur de la cartouche (1) à un orifice de remplissage débouchant dans le corps (2), le canal de remplissage (10) comprenant un clapet anti-retour de remplissage (11) qui empêche la sortie de l'air comprimé hors du corps (2), **caractérisée en ce que** la tête (3) comprend un canal de gonflage (31) qui relie le canal de remplissage (10) à un orifice de gonflage débouchant dans le corps (2), qui comprend un clapet anti-retour de gonflage (32) empêchant la sortie de l'air comprimé hors du corps (2), et dans lequel est monté mobile un organe de gonflage (30) actionné par un bouton de gonflage (22) et permettant l'ouverture du clapet anti-retour de gonflage (32).

2. Cartouche (1) selon la revendication 1, **caractérisée en ce que** le clapet anti-retour de remplissage (11) est ouvert quand la pression provenant d'un moyen d'approvisionnement d'air comprimé raccordé à l'orifice de connexion est supérieure à la pression régnant dans le corps (2).

3. Cartouche (1) selon l'une des revendications 1 et 2, **caractérisée en ce que** la tête (3) comprend un moyen de rappel élastique de gonflage (33) sollicitant l'organe de gonflage (30) dans une position verrouillée de gonflage dans laquelle le clapet anti-retour de gonflage (32) empêche la sortie de l'air comprimé hors du corps (2).

4. Cartouche (1) selon l'une des revendications 1 à 3, **caractérisée en ce que** la tête (3) comprend un manomètre (15) relié au canal de remplissage (10) en passant par une vanne (30) commandée par un bouton (22).

5. Cartouche (1) selon la revendication 4, **caractérisée en ce que** la vanne (30) est formée par l'organe de gonflage (30) et le bouton (22) est formé par le bouton de gonflage (22).

6. Cartouche (1) selon la revendication 5 dépendante de la revendication 3, **caractérisé en ce que** l'air comprimé contenu dans le canal de remplissage (10) atteint le manomètre (15) quand l'organe de gonflage (30) atteint une position de connexion au manomètre (15) située entre la position verrouillée de gonflage et une position à partir de laquelle le clapet anti-retour de gonflage (32) est ouvert.

7. Cartouche (1) selon la revendication 6, **caractérisée en ce que** l'air comprimé contenu dans le canal de remplissage (10) atteint le manomètre (15) quand l'organe de gonflage (30) atteint une position dans laquelle le clapet anti-retour de gonflage (32) est ouvert.

8. Cartouche (1) selon l'une des revendications 1 à 7, **caractérisée en ce que** la tête (3) comprend un canal de dégonflage (25) qui relie le canal de remplissage (10) à un orifice débouchant à l'extérieur de la cartouche (1), qui comprend un clapet anti-retour de dégonflage (27) empêchant la sortie de l'air comprimé hors de la cartouche (1), et dans lequel est monté mobile un organe de dégonflage (24) actionné par un bouton de dégonflage (23) et permettant l'ouverture du clapet anti-retour de dégonflage (27).

9. Cartouche (1) selon la revendication 8, **caractérisée en ce que** la tête (3) comprend un moyen de rappel élastique de dégonflage (26) sollicitant l'organe de dégonflage (24) dans une position dans laquelle le clapet anti-retour de dégonflage (27) empêche la sortie de l'air comprimé hors de la cartouche (1).

10. Cartouche (1) selon l'une des revendications 8 et 9, **caractérisée en ce que** le bouton de gonflage (22) et le bouton de dégonflage (23) peuvent être actionnés simultanément.

11. Cartouche (1) selon l'une des revendications 1 à 10, **caractérisée en ce que** la tête (3) comprend un témoin de pression (7) permettant de connaître la quantité d'air comprimé dans le corps (2).

12. Cartouche (1) selon l'une des revendications 1 à 11, **caractérisée en ce que** la tête (3) comprend une soupape de sécurité s'ouvrant quand la pression régnant dans le corps (2) atteint une valeur de sécurité.

## Patentansprüche

1. Druckluftspeicherpatrone (1), umfassend einen Körper (2), der geeignet ist, die Druckluft zu speichern, und einen Kopf (3), der geeignet ist, den Körper (2) hermetisch zu schließen und der einen Befüllungskanal (10) umfasst, der eine außerhalb der Patrone (1) ausmündenden Verbindungsöffnung mit einer innerhalb des Körpers (2) ausmündenden Befullungsöffnung verbindet, wobei der Befüllungskanal (10) ein Befüllungs-RückschlagventiI (11) umfasst, das das Herausströmen der Druckluft aus dem Körper (2) verhindert, **dadurch gekennzeichnet, dass** der Kopf (3) einen Aufblaskanal (31) umfasst, der den Befüllungskanal (10) mit einer innerhalb des Körpers (2) ausmündenden Aufblasöffnung verbindet, der ein Aufblas-Rückschlagventil (32) umfasst, das das Herausströmen der Druckluft aus dem Körper (2) verhindert, und in dem ein durch einen Aufblasknopf (22) betätigtes Aufblasorgan (30), das das Öffnen des Aufblas-Rückschlagventils (32) erlaubt, beweglich gelagert ist.

2. Patrone (1) nach Anspruch 1, **dadurch gekennzeichnet, dass** das Befüllungs-Rückschlagventil (11) offen ist, wenn der Druck aus einer mit der Verbindungsöffnung verbundenen Druckluftzufuhreinrichtung größer ist als der im Körper (2) herrschende Druck.

3. Patrone (1) nach Anspruch 1 oder 2, **dadurch gekennzeichnet, dass** der Knopf (3) ein elastisches Aufblas-Rückstellmittel (33) umfasst, das auf das Aufblasorgan (30) in einer verriegelten Aufblasposition drückt, in der das Aufblas-Rückschlagventil (32) das Herausströmen der Druckluft aus dem Körper (2) verhindert.

4. Patrone (1) nach einem der Ansprüche 1 bis 3, **dadurch gekennzeichnet, dass** der Kopf (3) ein Manometer (15) umfasst, das über ein mittels eines Knopfes (22) gesteuertes Ventil (30) mit dem Befüllungskanal (10) verbunden ist.

5. Patrone (1) nach Anspruch 4. **dadurch gekennzeichnet, dass** das Ventil (30) durch das Aufblasorgan (30) gebildet ist und der Knopf (22) durch den Aufblasknopf (22) gebildet ist.

6. Patrone (1) nach Anspruch 5, abhängig vom Anpruch 3, dadurch gekenntzeichnet, dass die im Befüllungskanal (10) enthaltene Druckluft das Manometer (15) erreicht, wenn das Aufblasorgan (30) eine mit dem Manometer (15) verbundene Position erreicht, die sich zwischen der verriegelten Aufblasposition und einer Position befindet, ab der das Aufblas-Rückschlagventil (32) geöffnet ist.

7. Patrone (1) nach Anspruch 6, **dadurch gekennzeichnet, dass** die im Befüllungskanal (10) enthaltene Druckluft das Manometer (15) erreicht, wenn das Aufblasorgan (30) eine Position erreicht, in der das Aufblas-Rückschlagventil (32) offen ist.

8. Patrone (1) nach einem der Ansprüche 1 bis 7, **dadurch gekennzeichnet, dass** der Kopf (3) einen Entleerungskanal (25) umfasst, der den Befüllungskanal (10) mit einer Öffnung verbindet, die außerhalb der Patrone (1) ausmündet, der ein Entleerungs-Rückschlagventil (27) umfasst, das das Herausströmen der Druckluft aus der Patrone (1) verhindert, und in dem ein über einen Entleerungsknopf (23) betätigtes Entleerungsorgan (24), das das Öffnen des Entleerungs-Rückschlagventils (27) erlaubt, beweglich gelagert ist.

9. Patrone (1) nach Anspruch 8, **dadurch gekennzeichnet, dass** der Kopf (3) eine elastische Entleerungs-Rückstelleinrichtung (26) umfasst, die auf das Entleerungsorgan (24) in eine Position drückt, in der das Entleerungs-Rückschlagventil (27) das Herausströmen der Druckluft aus der Patrone (1) verhindert.

10. Patrone (1) nach einem der Ansprüche 8 und 9, **dadurch gekennzeichnet, dass** der Aufblasknopf (22) und der Entleerungsknopf (23) gleichzeitig betätigbar sind.

11. Patrone (1) nach einem der Ansprüche 1 bis 10, **dadurch gekennzeichnet, dass** der Kopf (3) einen Druckanzeiger (7) umfasst, der es erlaubt, die Druckluftmenge im Körper (2) zu kennen.

12. Patrone (1) nach einem der Ansprüche 1 bis 11, **dadurch gekennzeichnet, dass** der Kopf (3) ein Sicherheitsventil umfasst, das sich öffnet, wenn der im Körper (2) herrschende Druck einen Sicherheitswert erreicht.

## Claims

1. A compressed air storage cartridge (1) comprising a body (2), which is adapted for storing the compressed air, and a head (3), which is adapted for tightly closing the body (2) and which comprises a filling channel 10) connecting a connection port ending at the outside of the cartridge (1) to a filling port ending inside the body (2), the filling channel (10) comprising a non-return filling valve (11), which prevents the compressed air from flowing out of the body (2), wherein the head (3) comprises an inflation channel (31), which connects the filling channel (10) to an inflation port ending inside the body (2), which comprises a non-return inflation valve (32) preventing the compressed air from flowing out of the body (2), and in which an inflation organ (30) actuated by an inflation knob (22) and permitting the non-return inflation valve (32) to open is movably mounted.

2. The cartridge (1) according to claim 1, wherein the non-return filling valve (11) is open when the pressure from a compressed air supply means connected to the connection port is higher than the pressure prevailing in the body (2).

3. The cartridge (1) according to claim 1 or 2, wherein the head (3) comprises a springy inflation restoring means (33) applying a force onto the inflation organ (30) in a locked inflation position in which the non-return inflation valve (32) prevents the compressed air from flowing out of the body (2).

4. The cartridge (1) according to one of claims 1 to 3, wherein the head (3) comprises a pressure gauge (15) connected to the filling channel (10) while passing through a valve (30) controlled by means of a knob (22).

5. The cartridge (1) according to claim 4, wherein the valve (30) is formed by the inflation organ (30) and the knob (22) is formed by the inflation knob (22).

6. The cartridge (1) according to claim 5 depending on claim 3, wherein the compressed air contained in the filling channel (10) reaches the pressure gauge (15) when the inflation organ (30) reaches a position of connection to the pressure gauge (15) located between the locked inflation position and a position from which the non-return inflation valve (32) is open.

7. The cartridge (1) according to claim 6, wherein the compressed air contained in the filling channel (10) reaches the pressure gauge (15) when the inflation organ (30) reaches a position in which the non-return inflation valve (32) is open.

8. The cartridge (1) according to one of claims 1 to 7, wherein the head (3) comprises a deflation channel (25), which connects the filling channel (10) to a port ending at the outside of the cartridge (1), which comprises a non-return deflation valve (27) preventing the compressed air from flowing out of the cartridge (1), and in which a deflation organ (24) actuated by a deflation knob (23) and permitting the opening the non-return deflation valve (27) is movably mounted.

9. The cartridge (1) according to claim 8, wherein the head (3) comprises a springy deflation restoring means (26) applying a force onto the deflation organ (24) in a position in which the non-return deflation valve (27) prevents the compressed air from flowing out of the cartridge (1).

10. The cartridge (1) according to one of claims 8 and 9, wherein the inflation knob (22) and the deflation knob (23) can be actuated simultaneously.

11. The cartridge (1) according to one of claims 1 to 10, wherein the head (3) comprises a pressure indicator (7) permitting to know the amount of compressed air in the body (2).

12. The cartridge (1) according to one of claims 1 to 11, wherein the head (3) comprises a safety valve, which opens when the pressure prevailing in the body (2) reaches a safety value.
